# EUROPÄISCHE PATENTSCHRIFT

(11) **EP 0 500 873 B1**
(45) Veröffentlichungstag und Bekanntmachung des Hinweises auf die Patenterteilung: **07.01.1998**
(21) Anmeldenummer: 91915923.6
(22) Anmeldetag: 11.09.1991
(51) Int. Cl.: H02K 1/14, H02K 3/42, H02K 21/22, H02K 29/00

(54) **ELEKTRISCHE MASCHINE**
ELECTRICAL MACHINE
MACHINE ELECTRIQUE

(30) Priorität: 14.09.1990 DE 4029271
(43) Veröffentlichungstag der Anmeldung: 02.09.1992
(73) Patentinhaber: MAGNET-MOTOR GESELLSCHAFT FÜR MAGNETMOTORISCHE TECHNIK MBH, D-82319 Starnberg (DE)
(72) Erfinder: HEIDELBERG, Götz, D-8136 Starnberg (DE); GRÜNDL, Andreas, D-8000 München 70 (DE); EHRHART, Peter, D-8000 München 70 (DE)
(74) Vertreter: Klunker . Schmitt-Nilson . Hirsch
(86) Internationale Anmeldenummer: EP9101729
(87) Internationale Veröffentlichungsnummer: WO9205618

(56) Entgegenhaltungen:
- EP-A- 0 373 987
- DE-A- 1 814 977
- FR-A- 2 050 029
- FR-A- 2 370 381
- US-A- 1 689 188
- US-A- 1 816 795

## Beschreibung

Die Erfindung bezieht sich auf eine elektrische Maschine mit folgenden Merkmalen:
(a) es sind ein mit Leiterwicklungen versehenes Induktionsteil und ein Erregerteil vorhanden;
(b) zwischen dem Induktionsteil und dem Erregerteil befindet sich ein Luftspalt;
(c) der Induktionsteil und der Erregerteil sind relativ zueinander bewegbar;
(d) der Induktionsteil weist wicklungsbesetzte Nuten zwischen benachbarten, in Richtung auf den Luftspalt vorstehenden Zähnen auf;
(e) der Induktionsteil weist Zähne auf, deren Breite - gemessen parallel zu einer entlang des Luftspalts gelegten Fläche sowie rechtwinklig zu der Relativbewegungsrichtung von Induktionsteil und Erregerteil - am betreffenden Zahnfuß größer ist als am betreffenden luftspaltbenachbarten Zahnkopf;
(f) und die im Vergleich zu dem betreffenden Zahnkopf vorgesehenen Zahnverbreiterungsbereiche haben an ihren, am weitesten vorragenden, freien Enden - in der Relativbewegungsrichtung gemessen - kleinere Abmessungen als an ihren Übergangsenden, wo sie in den restlichen Zahn übergehen.

Bei gängigen elektrischen Maschinen ist der Querscnnitt der Induktionsteil-Zähne - geschnitten parallel zu einer entlang des Luftspalts gelegten Fläche - über die Höhe des Zahns, also fortschreitend vom luftspaltbenachbarten Zahnkopf zum Zahnfuß, mindestens im wesentlichen konstant. Diese herkömmliche Auslegung ist hinsichtlich der Magnetflußbedingungen in den Induktionsteil-Zähnen nicht optimal. Wenn man vom Zahnkopf zum Zahnfuß eines Zahns fortschreitet, sind nämlich zunehmend mehr Windungen der Wicklungen in den Nuten an der Erzeugung von magnetischem Streufluß von Zahn zu Zahn über die dazwischenliegende Nut hinweg beteiligt, so daß die Magnetflußdichte am Zahnfuß erheblich größer als am Zahnkopf ist. Infolgedessen ist der Zahnkopf magnetisch unterausgenutzt, während der Zahnfuß die Grenze der magnetischen Auslastung setzt.

Aus dem Dokument US-A-1 816 795 ist eine elektrische Maschine mit den eingangs angegebenen Merkmalen (a) bis (f) bekannt. Bei dieser elektrischen Maschine beginnt die in Umfangsrichtung gemessene Verschmälerung der Zahnabmessungen (s. Merkmal (f)) an einer zwischen dem Übergangsende und dem freien Ende des betreffenden Zahnverbreiterungsbereichs befindlichen Stelle.

Demgegenüber ist die elektrische Maschine erfindungsgemäß dadurch gekennzeichnet,
(g) daß die Verkleinerung der Abmessungen der Zahnverbreiterungsbereiche an einer Stelle der in Merkmal (e) definierten Zahnbreite beginnt, die dem unverbreiterten Zahnkopf entspricht.

Im Vergleich zu den weiter vorn geschilderten, gängigen, elektrischen Maschinen hat die erfindungsgemäße, elektrische Maschine aufgrund des Merkmals (e) eine bessere Magnetflußdichtenausnutzung der Induktionsteil-Zähne (der betreffende Zahn bietet einen in Richtung vom Zahnkopf zum Zahnfuß zunehmenden Querschnitt, wodurch die Magnetflußdichte, wenn man in dieser Richtung fortschreitet, sich weniger stark ändert) und aufgrund des Merkmals (f) eine Reduzierung der magnetischen Streuflüsse direkt von Zahnverbreiterungsbereich zu nächstem Zahnverbreiterungbereich (in der Relativbewegungsrichtung gemessen, verbreitern sich die Nuten dort, wo die Zahnverbreiterungsbereiche sind).

Vorzugsweise nimmt die genannte Zahnbreite in Richtung vom Zahnkopf zum Zahnfuß allmählich derart zu, daß die magnetische Flußdichte längs des betreffenden Zahns im wesentlichen konstant ist.

Es wird darauf hingewiesen, daß nicht zwingend sämtliche Induktionsteil-Zähne der Maschine so ausgebildet sein müssen, wie vorstehend beschrieben. Abhängig von der konstruktiven Auslegung der Maschine kann es ausreichend sein, wenn nur ein Teil der Zähne derart ausgebildet ist. Außerdem wird auf den Fall hingewiesen, daß ein Teil der Zähne nicht mit Wicklungen versehen ist; insbesondere bei derartigen Zähnen kann man die erfindungsgemäße Verbreiterung unterlassen.

Die erfindungsgemäße elektrische Maschine kann ein Elektromotor oder ein Generator zum Erzeugen von Strom sein. Es kann sich um eine lineare oder eine rotatorische Maschine handeln. Innerhalb der Klasse der rotatorischen Maschinen kann es sich um eine mit zylindrischem Luftspalt oder um eine mit ebenem, sich rechtwinklig zur Rotationsachse erstreckenden Luftspalt (Scheibenläuferbauart) handeln.

Vorzugsweise haben die Magnetrückschlußbereiche zwischen den Zähnen - gemessen in der Richtung wie die genannte Zahnbreite - im wesentlichen die gleiche Breite wie die benachbarten Zahnfüße. Auf diese Weise kann dem Magnetfluß von einem Zahnfuß durch den dortigen Magnetrückschlußbereich zu einem benachbarten Zahnfuß ein im wesentlichen gleichbleibender Magnetflußquerschnitt geboten werden und vermieden werden, daß die Magnetflußdichte in den Rückschlußbereichen größer ist als in den Zahnfüßen. Es gibt jedoch weitere geometrische Möglichkeiten, den wünschenswerten, im wesentlichen gleichbleibenden Magnetflußquerschnitt auch im Magnetrückschluß zu bewerkstelligen, insbesondere Verdickung der Magnetrückschlußbereiche gemessen rechtwinklig zu der entlang des Luftspalts gelegten Fläche.

Es ist in Weiterbildung der Erfindung bevorzugt, daß bei dem Induktionsteil mindestens die im Vergleich zu dem betreffenden Zahnkopf vorgesehenen Zahnverbreiterungsbereiche aus einem isotropen, ferromagnetischen Material mit hohem elektrischen Widerstand bestehen. In den Zahnverbreiterungsbereichen ist der Magnetfluß nicht exakt in Richtung vom Zahnkopf zum Zahnfuß ausgerichtet, so daß in den Zahnverbreiterungsbereichen der für die Vermeidung von Wirbelstromverlusten übliche Aufbau aus geschichteten, voneinander isolierten Blechen keine perfekten Ergebnisse erbringt. Hier schafft diese Weiterbildungsmaßnahme Abhilfe. Es ist möglich und bevorzugt, weitere magnetflußführende Bestandteile des Induktionsteils aus einem isotropen, ferromagnetischen Material zu fertigen, insbesondere die Zahnfußbereiche und/oder die Zähne insgesamt und/oder die Magnetrückschlußbereiche. Überhaupt kann man den gesamten magnetflußführenden Bestandteil des Induktionsteils aus einem derartigen Material fertigen. Als bevorzugtes Beispiel des Materials sei ein kunststoffgebundenes Metallpulvermaterial genannt. Hieraus bestehende Teile lassen sich besonders rationell fertigen und gut bearbeiten.

Die Erfindung läßt sich bei allen Typen von elektrischen Maschinen einsetzen, die ein mit Leiterwicklungen versehenes Induktionsteil mit in Richtung auf den Luftspalt vorstehenden Zähnen aufweisen. Besonders bevorzugt sind jedoch elektrische Maschinen, die ein mit Dauermagneten aufgebautes Erregerteil aufweisen. Die Dauermagnete bestehen vorzugsweise aus einem Material auf der Basis von Seltenerden-Kobalt oder auf der Basis Seltenerden-Neodym, besonders bevorzugt Samerium-Kobalt oder Eisen-Neodym.

Vorzugsweise ist die Maschine ein elektronisch kommutierter Elektromotor.

Während die meisten herkömmlichen elektrischen Maschinen Leiterwicklungen haben, die für mehrere Zähne unmittelbar zusammenhängen, typischerweise unter Bildung von Wickelköpfen mit ein und demselben Stromleiter nacheinander gewickelt sind, ist es in Weiterbildung der Erfindung bevorzugt, die Maschine nach dem Einzelspulenprinzip aufzubauen. Hierbei wird jeder betreffende Induktionsteil-Zahn mit einer einzelnen Spule versehen und werden die beiden Enden des Stromleiters der betreffenden Spule stromzuführend und stromableitend angeschlossen. Dabei kann man so vorgehen, daß man jede Spule einzeln anschließt oder daß man sämtliche Spulen miteinander verbindet und gemeinsam anschließt oder daß man Gruppen bzw. Teilanzahlen von Spulen miteinander verbindet und diese Gruppen anschließt. "Anschließen" bedeutet im Fall einer elektronisch kommutierten Maschine das Verbinden mit dem Leistungsteil der elektronischen Kommutierung. Es wird darauf hingewiesen, daß es Ausführungsformen gibt, bei denen nicht jeder Zahn mit einer Spule versehen ist, sondern insbesondere nur jeder zweite Zahn.

Vorzugsweise ist die Maschine nach dem Flußkonzentrationsprinzip aufgebaut. Ein typisches, bevorzugtes Beispiel für den Aufbau nach dem Flußkonzentrationsprinzip besteht darin, daß die Dauermagnete - im Schnitt rechtwinklig zur Rotationsachse betrachtet - im wesentlichen dreieckförmig und in Umfangsrichtung magnetisiert sind, daß in Umfangsrichtung abwechselnd mit den Dauermagneten Bereiche aus magnetisch leitendem Material vorhanden sind, und daß die dem Luftspalt zugewandten Magnetflußaustrittsflächen dieser Bereiche aus magnetisch leitendem Material jeweils kleiner sind als die Summe der Magnetflußquerschnitte der beiden angrenzenden Dauermagnete.

Die Erfindung und Ausgestaltung der Erfindung werden nachfolgend anhand eines schematisiert zeichnerisch dargestellten Ausführungsbeispiels noch näher erläutert. Es zeigen:
- Fig. 1: einen rotatorischen Elektromotor im Längsschnitt durch seine Rotationsachse, wobei nur die obere Hälfte des Motors gezeichnet ist;
- Fig. 2: einen Schnitt längs II-II in Fig. 1, der von einer zylindrischen Schnittfläche in eine Ebene abgewickelt ist.

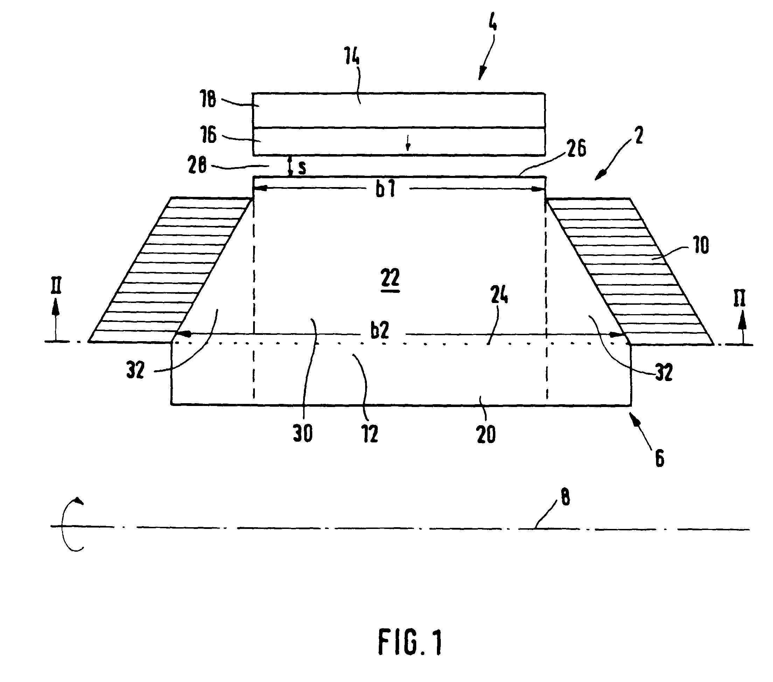

Der in Fig. 1 schematisiert dargestellte Elektromotor 2 ist ein sogenannter Außenrotor-Motor, bei dem ein im wesentlichen hohlzylindrischer Rotor 4 einen Stator 6 mit im wesentlichen zylindrischem Außenumfang umgibt. In der Regel ist der Rotor 4 im wesentlichen becherförmig gestaltet, so daß er axial neben dem Stator 6 gelagert sein kann. Der Rotor 4 kann um eine Rotationsachse 8 relativ zu dem Stator 6 rotieren, wie in Fig. 1 schematisch angedeutet.

Von dem Stator 6 sind in Fig. 1 die für die Funktion des Motors 2 wesentlichen Teile dargestellt, nämlich ein mit Leiterwicklungen 10 versehenes Induktionsteil 12. Der für die Funktion des Motors 2 wesentliche Bestandteil des Rotors 4 ist ein gezeichnetes Erregerteil 14, das im wesentlichen aus einer umfangsmäßig angeordneten Reihe von Dauermagneten 16 und radial außerhalb davon einem Rückschlußring 18 besteht. Die Dauermagnete 16 sind in Radialrichtung magnetisiert, und zwar - wenn man in Umfangsrichtung fortschreitet - abwechselnd Südpol innen und Nordpol innen.

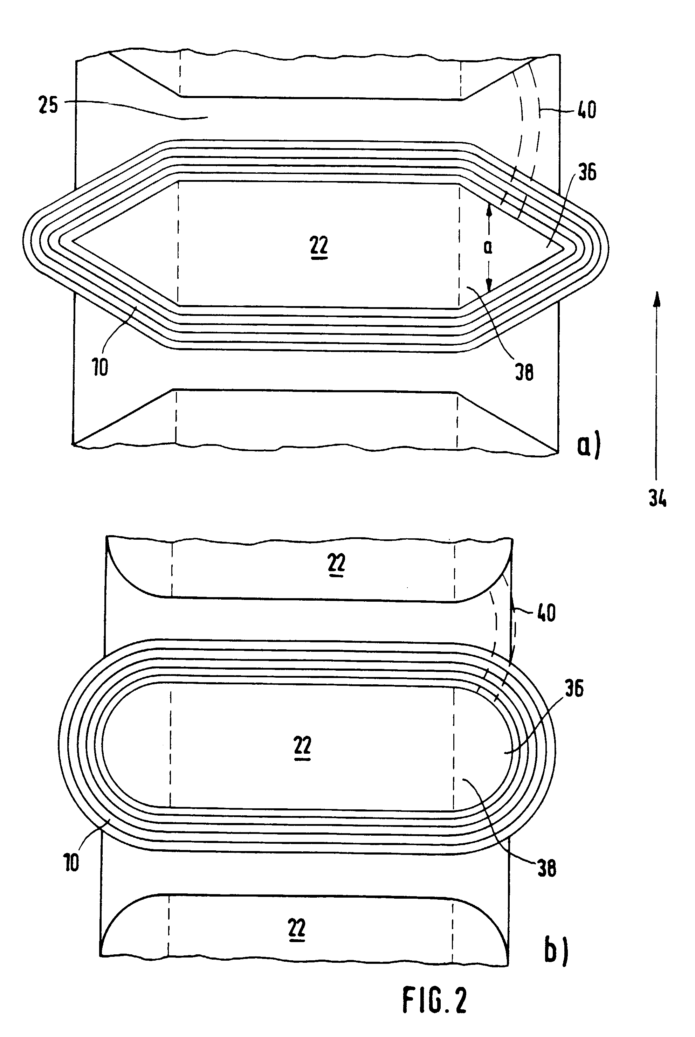

Von dem Stator 6 ist der unschraffierte Bereich 12 der magnetflußführende Bestandteil des Induktionsteils. Der magnetflußführende Bestandteil 12 besteht integral im wesentlichen aus einem insgesamt ringförmigen Magnetrückschlußbereich 20 und Zähnen 22, die von dem Magnetrückschlußbereich 20 nach außen ragen. Die Grenze zwischen beiden Bereichen ist durch die gepunktete Linie 24 angedeutet. Wenn man in Umfangsrichtung fortschreitet, befindet sich jeweils zwischen zwei benachbarten Zähnen 22 eine sich axial erstreckende Nut 25 (Fig. 2).

Für jeden Zahn 22 ist eine Einzelspule 10 vorgesehen. Der Stromleiter, aus dem die Einzelspule 10 gewickelt ist, verläuft in den beiden beteiligten Nuten 25 im wesentlichen axial und führt um die beiden Axialenden des betreffenden Zahns 22 herum. Die Einzelspulen 10 sind einzeln oder gruppenweise oder alle gemeinsam an einen Stromausgang eines nicht gezeigten Leistungsteils einer Steuerung zur elektronischen Kommutierung des Motors 2 angeschlossen.

Zwischen dem in Fig. 1 oben befindlichen Zahnkopf 26 des gezeichneten Zahns 22 und der in Fig. 1 nach unten weisenden Polfläche des gezeichneten Dauermagneten 16 befindet sich ein zylindrischer Luftspalt 28 mit einer radialen Dicke s. Der Zahnkopf 26 hat in Axialrichtung gemessen, also in Fig. 1 von links nach rechts, eine Breite bl. Der an den Magnetrückschlußbereich 20 angrenzende Zahnfuß 30 des gezeichneten Zahns 22 hat in Axialrichtung gemessen eine Breite b2. Man erkennt, daß die Breite b2 größer ist als die Breite bl. Konkret ist die Ausbildung so, daß ein Stück unterhalb der luftspaltzugewandten Polfläche des Zahns 22 (nämlich wo die Spule 10 beginnt) beidendig eine linear zunehmende Verbreiterung des Zahns 22 einsetzt. Im Vergleich zum Zahnkopf 26 entstehen hierdurch Zahnverbreiterungsbereiche 32, die im Schnitt der Fig. 1 dreieckig sind. Somit ist für den in Fig. 1 im wesentlichen vertikal verlaufenden Magnetfluß in dem Zahn 22 ein Magnetflußquerschnitt gebildet, der in Richtung vom Zahnkopf 26 zum Zahnfuß 30 zunimmt. Der Magnetrückschlußbereich 20 hat ebenfalls die Breite b2.

In Fig. 2 erkennt man, daß die Zahnverbreiterungsbereiche 32 - gemessen in der Relativbewegungsrichtung 34 von Rotor 4 und Stator 6 - an ihren in den beiden Axialrichtungen am weitesten vorragenden, freien Enden 36 kleinere Abmessungen haben als an ihren Übergangsenden 38, wo sie in den restlichen Zahn 22 (= Zahn 22, wenn keine Zahnverbreitungsbereiche 32 vorhanden wären) übergehen. Konkret sind die Zahnverbreiterungsbereiche 32 in der radialen Blickrichtung der Fig. 2 beispielsweise dreieckig (Fig. 2a) oder halbkreisförmig (Fig. 2b). Magnetische Streuflüsse, die mit dem Bezugszeichen 40 angedeutet sind und die das Bestreben haben, von einem Zahnverbreiterungsbereich 32 zu einem in Umfangsrichtung benachbarten Zahnverbreitungsbereich unter Umgehung des Magnetrückschlußbereichs 20 zu fließen, finden infolgedessen dort einen längeren Weg durch Luft vor, so daß der Ausbildung derartiger magnetischer Streuflüsse entgegengewirkt ist.

Vorzugsweise bestehen mindestens die Zahnverbreiterungsbereiche 32 des Induktionsteils 12 aus isotropem, ferromagnetischen Material, weil man hiermit gerade in den Zahnverbreitungsbereichen 32 die weitestmögliche Vermeidung von Wirbelströmen am besten im Griff hat. Es ist jedoch möglich, auch die Zähne 22 und/oder den Magnetrückschlußbereich 20 aus derartigem Material zu fertigen.

Eine bevorzugte Variante des Erregerteils 14 besteht darin, daß man - gesehen in einer Schnittebene rechtwinklig zur Rotationsachse 8 - im wesentlichen dreieckige, mit der Spitze nach radial innen weisenden, in Umfangsrichtung magnetisierte Dauermagnete 16 vorsieht, wobei sich zwischen in Umfangsrichtung benachbarten Dauermagneten 16 magnetisch leitende Bereiche befinden. Entsprechend dem Flußkonzentrationsprinzip kann man die Auslegung so machen, daß die magnetisch leitenden Bereiche eine radial nach innen weisende Magnetaustrittsfläche haben, die kleiner ist als die Summe der beiden, radial gemessenen Magnetflußquerschnitte der beiden in Umfangsrichtung benachbarten Dauermagnete 16.

## Patentansprüche

1. Elektrische Maschine, mit folgenden Merkmalen:
(a) es sind ein mit Leiterwicklungen (10) versehenes Induktionsteil (12) und ein Erregerteil (14) vorhanden;
(b) zwischen dem Induktionsteil (12) und dem Erregerteil (14) befindet sich ein Luftspalt (28);
(c) der Induktionsteil (12) und der Erregerteil (14) sind relativ zueinander bewegbar;
(d) der Induktionsteil (12) weist wicklungsbesetzte Nuten (25) zwischen benachbarten, in Richtung auf den Luftspalt (28) vorstehenden Zähnen (22) auf;
(e) der Induktionsteil (12) weist Zähne (22) auf, deren Breite (b) - gemessen parallel zu einer entlang des Luftspalts (28) gelegten Fläche sowie rechtwinklig zu der Relativbewegungsrichtung (34) von Induktionsteil (12) und Erregerteil (14) - am betreffenden Zahnfuß (30) größer ist als am betreffenden luftspaltbenachbarten Zahnkopf (26);
(f) und die im Vergleich zu dem betreffenden Zahnkopf (26) vorgesehenen Zahnverbreiterungsbereiche (32) haben an ihren, am weitesten vorragenden, freien Enden (36) - in der Relativbewegungsrichtung (34) gemessen - kleinere Abmessungen (a) als an ihren Übergangsenden (38), wo sie in den restlichen Zahn übergehen,
**dadurch gekennzeichnet,**
(g) daß die Verkleinerung der Abmessungen (a) der Zahnverbreiterungsbereiche (32) an einer Stelle der in Merkmal (e) definierten Zahnbreite (b) beginnt, die dem unverbreiterten Zahnkopf (26) entspricht.

2. Elektrische Maschine nach Anspruch 1,
dadurch gekennzeichnet,
daß die genannte Zahnbreite (b) in Richtung vom Zahnkopf (26) zum Zahnfuß (30) allmählich derart zunimmt, daß die magnetische Flußdichte längs des betreffenden Zahns (22) im wesentlichen konstant ist.

3. Elektrische Maschine nach einem der Ansprüche 1 bis 2,
dadurch gekennzeichnet,
daß die Magnetrückschlußbereiche (20) zwischen den Zähnen (22) - gemessen in der Richtung wie die genannte Zahnbreite (b) - im wesentlichen die gleiche Breite wie die benachbarten Zahnfüße (30) haben.

4. Elektrische Maschine nach einem der Ansprüche 1 bis 3,
dadurch gekennzeichnet,
daß bei dem Induktionsteil (12) mindestens die im Vergleich zu dem betreffenden Zahnkopf (26) vorgesehenen Zahnverbreiterungsbereiche (32) aus eine isotropem, ferromagnetischen Material mit hohem elektrischen Widerstand bestehen.

5. Elektrische Maschine nach Anspruch 4,
dadurch gekennzeichnet,
daß der magnetflußführende Bestandteil des Induktionsteils (12) insgesamt im wesentlichen aus einem isotropen, ferromagnetischen Material mit hohem elektrischen Widerstand besteht.

6. Elektrische Maschine nach Anspruch 4 oder 5,
dadurch gekennzeichnet,
daß das isotrope ferrogmagnetische Material ein kunststoffgebundenes Metallpulvermaterial ist.

7. Elektrische Maschine nach einem der Ansprüche 1 bis 6,
dadurch gekennzeichnet,
daß der Erregerteil (14) mit Dauermagneten (16) aufgebaut ist, vorzugsweise Dauermagneten (16) auf der Basis Seltenerden-Kobalt oder auf der Basis Seltenerden-Eisen,

8. Elektrische Maschine nach einem der Ansprüche 1 bis 7,
dadurch gekennzeichent,
daß sie ein elektronisch kommutierter Elektromotor (2) ist.

9. Elektrische Maschine nach einem der Ansprüche 1 bis 8,
dadurch gekennzeichnet,
daß die Leiterwicklungen (10) des Indukzionsteils (12) aus Einzelspulen pro Induktionsteil-Zahn (22) gebildet sina, die einzeln mit dem Leistungsteil der elektronischen Kommutierung verbunden sind, oder die gruppenweise miteinander verschaltet und pro Gruppe mit dem Leistungsteil der elektronischen Kommutierung verbunden sind, oder die alle miteinander verschaltet oder gemeinsam mit dem Leistungsteil der elektronischen Kommutierung verbunden sind.

10. Elektrische Maschine nach einem der Ansprüche 1 bis 9,
dadurch gekennzeichnet,
daß sie nach dem Flußkonzentrationsprinzip aufgebaut ist.

## Claims

1. An electric machine comprising the following features:
(a) there are provided an induction part (12) having conductor coils (10), and an exciter part (14);
(b) an air gap (28) is provided between said induction part (12) and said exciter part (14);
(c) the induction part (12) and the exciter part (14) are movable relative to each other;
(d) the induction part (12) has grooves (24) provided with coils between adjacent teeth (22) projecting in the direction towards the air gap (28);
(e) the induction part (12) has teeth (22), the width (b) of which - as measured parallel to a plane along the air gap (28) and at right angles to the direction (34) of relative movement of induction part (12) and exciter part (14) - is greater at the respective tooth base (30) than at the respective tooth tip (26) adjacent the air gap;
(f) and the tooth widening portions (32) provided in comparison with the respective tooth tip (26) are formed at their free ends (36) projecting furthest with smaller dimensions (a) - as measured in the direction (34) of relative movement - than at their transition ends (38) where they merge with the tooth remainder,
**characterized in**
(g) that the reduction of the dimensions (a) of said tooth widening portions (32) starts at a position of the tooth width (b) defined in feature (e) corresponding to the unwidened tooth tip (26).

2. An electric machine according to claim 1,
characterized in that the said tooth width (b) increases gradually in the direction from the tip (26) to the base (30) of the tooth such that the magnetic flux density is substantially constant along the particular tooth (22).

3. An electric machine according to any of claims 1 to 2,
characterized in that the magnetic return path portions (20) between the teeth (22) - as measured in the same direction as said tooth width (b) - have substantially the same width as the adjacent teeth bases (30).

4. An electric machine according to any of claims 1 to 3,
characterized in that of said induction part (12), at least the tooth widening portions (32) provided in comparison with the respective tooth tip (26) consist of an isotropic ferromagnetic material of high electrical resistance.

5. An electric machine according to claim 4,
characterized in that the magnetic flux carrying component of the induction part (12) in total consists substantially of an isotropic material of high electrical resistance.

6. An electric machine according to claim 4 or 5,
characterized in that said isotropic ferromagnetic material is a plastics bound metal powder material.

7. An electric machine according to any of claims 1 to 6,
characterized in that the exciter part (14) is composed with permanent magnets (16), preferably permanent magnets (16) on the basis of rare earths and cobalt or based on rare earths and iron.

8. An electric machine according to any of claims 1 to 7,
characterized in that it is an electronically commutated electric motor (2).

9. An electric machine according to any of claims 1 to 8,
characterized in that the conductor coils (10) of induction part (12) are formed of individual coils for each induction part tooth (22), which are individually connected to the power part of the electronic commutation, or which are interconnected in groups and are connected as groups each to the power part of the electronic commutation, or which are all interconnected or commonly connected to the power part of the electronic commutation.

10. An electric machine according to any of claims 1 to 9,
characterized in that it is composed in accordance with the flow concentration principle.

## Revendications

1. Machine électrique présentant les caractéristiques suivantes :
(a) elle comprend une partie induction (12) pourvue d'enroulements de conducteurs (10) et une partie excitateur (14) ;
(b) entre la partie induction (12) et la partie excitateur (14) se trouve un entrefer (28) ;
(c) la partie induction (12) et la partie excitateur (14) sont déplaçables l'une par rapport à l'autre ;
(d) la partie induction (12) présente des rainures (25) occupées par des enroulements entre des dents (22) voisines, faisant saillie en direction de l'entrefer (28) ;
(e) la partie induction (12) présente des dents (22) dont la largeur (b) - mesurée parallèlement à une surface disposée le long de l'entrefer (28) ainsi que perpendiculairement à la direction de déplacement relatif (34) de la partie induction (12) et de la partie excitateur (14) - est plus grande au pied de dent (30) concerné qu'à la tête de dent (26) concernée, voisine de l'entrefer ;
(f) et les zones d'élargissement de dent (32), prévues par rapport de la tête de dent (26) concernée, présentent, à leurs extrémités (36) libres, dépassant le plus loin - mesurées dans la direction de déplacement relatif (34) - de plus petites dimensions (a) qu'à leurs extrémités de transition (38), où elles se prolongent par le reste de la dent,
caractérisée
(g) en ce que la diminution des dimensions (a) des zones d'élargissement de dent (32) commence en un point de la largeur de dent (b), définie dans la caractéristique (e), qui correspond à la tête de dent (26) non élargie.

2. Machine électrique selon la revendication 1, caractérisée en ce que la largeur de dent (b) citée augmente progressivement, depuis la tête de dent (26) vers le pied de dent (30), de manière que la densité de flux magnétique soit sensiblement constante le long de la dent (22) concernée.

3. Machine électrique selon l'une des revendications 1 ou 2, caractérisée en ce que les zones de rétroaction magnétique (20) entre les dents (22) - mesurées dans la même direction que la largeur de dent (b) citée - ont sensiblement la même largeur que les pieds de dent (30) voisins.

4. Machine électrique selon l'une des revendications 1 à 3, caractérisée en ce que dans la partie induction (12), au moins les zones d'élargissement de dent (32), prévues par rapport à la tête de dent (26) concernée, sont faites d'un matériau isotrope, ferromagnétique, présentant une grande résistance électrique.

5. Machine électrique selon la revendication 4, caractérisée en ce que la partie constitutive, conduisant le flux magnétique, de la partie induction (12), est faite dans l'ensemble, pour l'essentiel, d'un matériau ferromagnétique, isotrope, présentant une grande résistance électrique.

6. Machine électrique selon la revendication 4 ou 5, caractérisée en ce que le matériau ferromagnétique, isotrope, est un matériau en poudre métallique lié avec une matière plastique.

7. Machine électrique selon l'une des revendications 1 à 6, caractérisée en ce que la partie excitateur (14) est construite avec des aimants permanents (16), de préférence des aimants permanents (16) à base de terres rares et cobalt ou à base de terres rares et fer.

8. Machine électrique selon l'une des revendications 1 à 7, caractérisée en ce qu'elle est un moteur électrique (2) commuté électroniquement.

9. Machine électrique selon l'une des revendications 1 à 8, caractérisée en ce que les enroulements de conducteurs (10) de la partie induction (12) sont formés de bobines individuelles par dent (22) de la partie induction, qui sont reliées individuellement avec la partie puissance de la commutation électronique, ou qui sont connectées entre elles en groupes, et sont reliées, par groupe, avec la partie puissance de la commutation électronique, ou qui toutes sont connectées entre elles ou reliées conjointement à la partie puissance de la commutation électronique.

10. Machine électrique selon l'une des revendications 1 à 9, caractérisée en ce qu'elle est construite suivant le principe de la concentration des flux.
